(19) Europäisches Patentamt / European Patent Office / Office européen des brevets

(11) **EP 3 798 416 B1**

(12) **EUROPÄISCHE PATENTSCHRIFT**

(45) Veröffentlichungstag und Bekanntmachung des Hinweises auf die Patenterteilung:
**26.04.2023 Patentblatt 2023/17**

(21) Anmeldenummer: **20195435.1**

(22) Anmeldetag: **10.09.2020**

(51) Internationale Patentklassifikation (IPC):
**F01D 5/18** $^{(2006.01)}$ **F01D 9/02** $^{(2006.01)}$

(52) Gemeinsame Patentklassifikation (CPC):
**F01D 5/18; F01D 5/187; F01D 9/02;** F05D 2250/00;
F05D 2250/185; F05D 2250/70; F05D 2250/73

(54) **SCHAUFEL EINER STRÖMUNGSMASCHINE**

BLADE OF A TURBOMACHINE

AUBE D'UNE TURBOMACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2019 DE 102019125779**

(43) Veröffentlichungstag der Anmeldung:
**31.03.2021 Patentblatt 2021/13**

(73) Patentinhaber: **MAN Energy Solutions SE 86153 Augsburg (DE)**

(72) Erfinder:
• **Pöhler, Thorsten 46539 Dinslaken (DE)**
• **Frank, Dirk 46562 Voerde (DE)**

(56) Entgegenhaltungen:
EP-A2- 2 374 997          EP-B1- 2 374 997
WO-A1-2019/040272    JP-A- 2004 132 218
US-A1- 2007 140 851    US-A1- 2019 211 693

**Beschreibung**

Die Erfindung betrifft eine Schaufel einer Strömungsmaschine.

Strömungsmaschinen, wie Turbinen oder Verdichter, verfügen über statorseitige Baugruppen sowie rotorseitige Baugruppen. Zu den rotorseitigen Baugruppen einer Strömungsmaschine gehört der sogenannte Strömungsmaschinenrotor, der einen Nabenkörper und sich ausgehend vom Nabenkörper nach radial außen erstreckende Laufschaufeln aufweist. Zu den statorseitigen Baugruppen gehören sogenannte Leitschaufeln.

Eine Laufschaufel und eine Leitschaufel einer Strömungsmaschine verfügt über ein strömungsführendes Schaufelblatt. Das Schaufelblatt der jeweiligen Schaufel verfügt über eine Strömungseintrittskante, eine Strömungsaustrittskante sowie über sich zwischen der Strömungseintrittskante und der Strömungsaustrittskante erstreckende Strömungsführungsflächen für ein Prozessmedium, die auch als Saugseite und Druckseite bezeichnet werden. Eine Laufschaufel verfügt weiterhin über einen Schaufelfuß, über welchen die Laufschaufel im Nabenkörper der Strömungsmaschine befestigt werden kann. Der Schaufelfuß ist typischerweise tannenbaumartig mit mindestens zwei in Radialrichtung der Laufschaufel gesehen, voneinander beabstandeten Vorsprüngen ausgebildet. Auch eine Leitschaufel kann einen Schaufelfuß aufweisen, um die Leitschaufel insbesondere an einem statorseitigen Gehäuse zu befestigen. Eine Laufschaufel verfügt auch über ein sogenanntes Innendeckband, welches in Radialrichtung der Laufschaufel gesehen zwischen dem Schaufelblatt und dem Schaufelfuß angeordnet ist. Radial außen an das Schaufelblatt kann sich gegebenenfalls ein Außendeckband anschließen. Auch Leitschaufeln können Deckbänder aufweisen.

Insbesondere im Bereich von Turbinen, in welchen ein heißes Prozessmedium über die Strömungsmaschine strömt, kommen Schaufeln zum Einsatz, in welche ein Kühlkanal integriert ist. Der Kühlkanal erstreckt sich dabei zumindest über das Schaufelblatt der jeweiligen Schaufel.

EP 2374997 A2 beschreibt eine Komponente einer Gasturbine mit einem Rippe, welche einen internen Kühlkanal definiert, wobei das Ende der Rippe eine Verdickung aufweist.

US 2007/140851 A1 beschreibt einen serpentinenförmigen Kühlkanal durch ein Rotorblatt einer Gasturbine.

Obwohl bereits gekühlte Schaufeln von Strömungsmaschinen mit einem Kühlkanal, der in die Schaufel integriert ist, grundsätzlich bekannt sind, besteht Bedarf daran, die Kühlung einer Schaufel weiter zu verbessern, und zwar bei gleichzeitig hoher Festigkeit der Schaufel.

Hiervon ausgehend liegt der vorliegenden Erfindung die Aufgabe zugrunde, eine neuartige Schaufel einer Strömungsmaschine zu schaffen, die trotz Kühlkanal eine hohe Festigkeit aufweist. Diese Aufgabe wird durch eine Schaufel nach Anspruch 1 gelöst.

Die erfindungsgemäße Schaufel verfügt über ein Schaufelblatt, welches eine Strömungseintrittskante, eine Strömungsaustrittskante und sich zwischen der Strömungseintrittskante und der Strömungsaustrittskante erstreckende Strömungsführungsflächen für ein Prozessmedium aufweist. Die erfindungsgemäße Laufschaufel verfügt weiterhin über einen in das Schaufelblatt integrierten Kühlkanal für ein Kühlmedium, wobei sich im Bereich des Schaufelblatts Kühlkanalabschnitte jeweils im Wesentlichen in Radialrichtung erstrecken, und wobei benachbarte Kühlkanalabschnitte jeweils über einen Umlenkkanalabschnitt ineinander übergehen. Die erfindungsgemäße Laufschaufel verfügt weiterhin über einen sich zwischen den benachbarten Kühlkanalabschnitten erstreckenden Materialsteg, wobei der jeweilige Materialsteg im Bereich des jeweiligen Umlenkkanalabschnitts endet, wobei der jeweilige Materialsteg zwischen den jeweiligen benachbarten Kühlkanalabschnitten eine definierte axiale Breite aufweist, und wobei der jeweilige Materialsteg im Bereich des jeweiligen Umlenkkanalabschnitts unter Vergrößerung der axialen Breite um mindestens 20% eine Materialaufdickung aufweist.

Die Schaufel ist bei hoher Festigkeit effektiv kühlbar.

Gemäß der Erfindung ist im Axialschnitt gesehen die jeweilige Materialaufdickung prismenartig mit einer axial vorderen und damit der Strömungseintrittskante zugewandten, verrundeten Ecke, mit einer axial hinteren und damit von der Strömungseintrittskante abgewandten, verrundeten Ecke und einer axial mittleren, in Axialrichtung gesehen zwischen diesen verrundeten Ecken angeordneten, radial äußeren oder radial inneren, verrundeten Ecke ausgebildet. Dies dient der effektiven Kühlung der Schaufel bei gleichzeitig hoher Festigkeit der Schaufel.

Nach einer ersten Variante der Erfindung ist im Axialschnitt gesehen die jeweilige prismenartige Materialaufdickung derart symmetrisch ausgebildet, dass die jeweilige axial vordere, verrundete Ecke und die jeweilige axial hintere, verrundete Ecke auf dergleichen Radialposition angeordnet sind, und dass die jeweilige axial mittlere, verrundete Ecke in der axialen Mitte zwischen der jeweiligen axial vorderen, verrundeten Ecke und der jeweiligen axial hinteren, verrundeten Ecke und in der axialen Mitte des jeweiligen Materialstegs außerhalb der jeweiligen Materialaufdickung angeordnet ist. Dies dient der effektiven Kühlung der Schaufel bei gleichzeitig hoher Festigkeit der Laufschaufel.

Nach einer zweiten Variante der Erfindung ist im Axialschnitt gesehen die jeweilige prismenartige Materialaufdickung derart unsymmetrisch ausgebildet, dass die jeweilige axial mittlere, verrundete Ecke gegenüber der axialen Mitte zwischen der jeweiligen axial vorderen, verrundeten Ecke und der jeweiligen axial hinteren, verrundeten Ecke und gegenüber der axialen Mitte des jeweiligen Materialstegs außerhalb der jeweiligen Materialaufdickung nach axial vorne und damit in Richtung auf die Strömungseintrittskante verschoben ist. Durch diese unsymmetrisch Variante kann die Kühlmediumströmung im Bereich des jeweiligen Umlenkkanalabschnitts eingestellt werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

Fig. 1    eine Seitenansicht einer als Laufschaufel ausgebildeten erfindungsgemäßen Schaufel einer Strömungsmaschine;

Fig. 2    Konturen eines exemplarischen, bekannten Kühlkanals;

Fig. 3    ein Detail des exemplarischen Kühlkanals;

Fig. 4    das Detail der Fig. 3 in einer perspektivischen Ansicht;

Fig. 5    das Detail der Fig. 3 mit geometrischen Größen gemäß der Erfindung;

Fig. 6    ein alternatives Detail mit weiteren geometrischen Größen gemäß der Erfindung.

Die Erfindung betrifft eine Schaufel einer Strömungsmaschine.

Bei der erfindungsgemäßen Schaufel kann es sich sowohl um eine Laufschaufel als auch um eine Leitschaufel handeln. Nachfolgend wird die Erfindung für das Beispiel einer Laufschaufel beschrieben.

Die in den Figuren gezeigte, exemplarische Laufschaufel 10 umfasst ein Schaufelblatt 11 und einen Schaufelfuß 12. Das Schaufelblatt 11 dient der Strömungsführung eines Prozessmediums PM, insbesondere von Prozessgas, welches durch die Strömungsmaschine strömt, wobei das Schaufelblatt 11 eine Strömungseintrittskante 13, eine Strömungsaustrittskante 14 und sich zwischen der Strömungseintrittskante 13 und der Strömungsaustrittskante 14 erstreckende Strömungsführungsflächen 15 für das Prozessmedium PM aufweist. Die Strömungsführungsflächen 15 bilden eine Saugseite und eine Druckseite.

Der Schaufelfuß 12 dient der Befestigung der Laufschaufel 10 in einem nicht gezeigten Nabenkörper der Strömungsmaschine. Der Schaufelfuß 12 ist vorzugsweise tannenbaumartig ausgebildet.

Die Laufschaufel 10 verfügt weiterhin über ein Innendeckband 18, welches in Radialrichtung der Laufschaufel 10 gesehen zwischen dem Schaufelblatt 11 und dem Schaufelfuß 12 der Laufschaufel 10 angeordnet ist. Das Innendeckband 18 begrenzt radial innen einen Strömungsführungskanal für das Prozessmedium PM. Im gezeigten Ausführungsbeispiel verfügt die Laufschaufel 10 weiterhin über ein Außendeckband 19. Das Außendeckband 19 begrenzt radial außen den Strömungsführungskanal für das Prozessmedium PM.

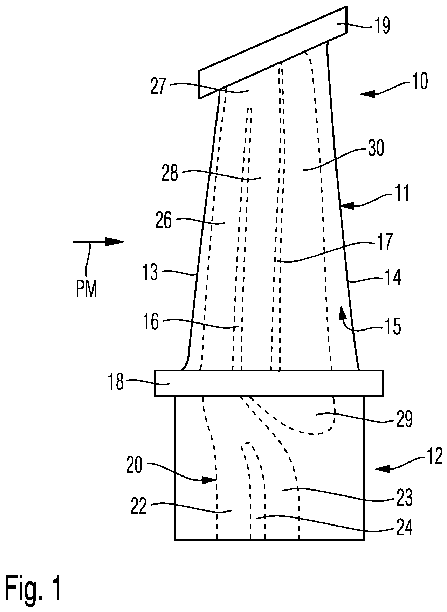

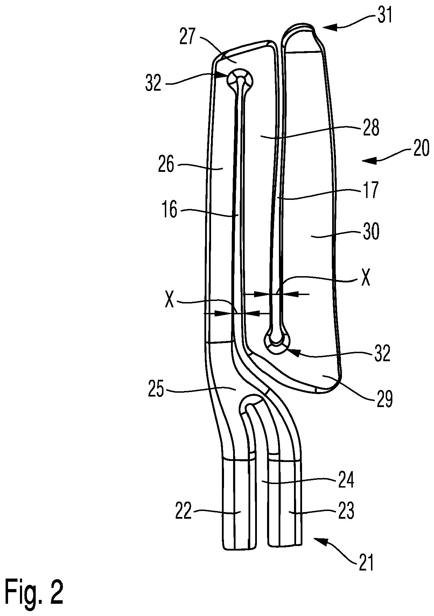

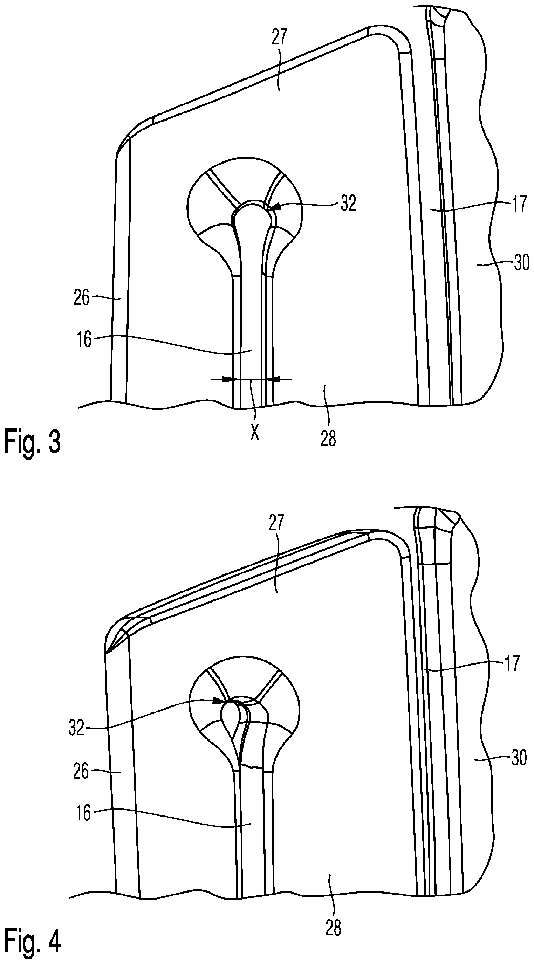

In die Laufschaufel 10 ist ein Kühlkanal 20 für Kühlmedium KM, insbesondere Kühlluft, integriert. In Fig. 1 sind Konturen des Kühlkanals 20 gestrichelt gezeigt. Fig. 2 bis 5 zeigen lediglich die Konturen des Kühlkanals 20 ohne die eigentliche Laufschaufel 10. Der Kühlkanal 20 verfügt über einen Eintritt oder Kühlkanaleintritt 21, der radial innen am Schaufelfuß 12 ausgebildet ist. Ferner verfügt der Kühlkanal 20 über einen Austritt oder Kühlkanalaustritt 31, der radial außen am Schaufelblatt 11 oder am Außendeckband 19 ausgebildet ist.

Der Eintritt oder Kühlkanaleintritt 21 des Kühlkanals 20 umfasst einen ersten Eintrittskanalabschnitt 22 und einen zweiten Eintrittskanalabschnitt 23. Wie am besten Fig. 1 entnommen werden kann, ist der erste Eintrittskanalabschnitt 22 in Axialrichtung gesehen bezogen auf die Strömung des Prozessmediums vorne positioniert, also näher an einem bezogen die Prozessmediumströmung stromaufwärtigen oder axial vorderen Ende des Schaufelfußes 12 positioniert als der zweite Eintrittskanalabschnitt 23. Der zweite Eintrittskanalabschnitt 23 ist in Axialrichtung des Schaufelfußes 12 gesehen hinter dem ersten Eintrittskanalabschnitt 22 angeordnet.

Wie bereits ausgeführt, dient der Schaufelfuß 12 nicht der Prozessmediumführung, sondern lediglich der Befestigung bzw. Montage der Laufschaufel 10 am Nabenkörper. Nichtsdestotrotz weist der Schaufelfuß 12 jedoch zwei sich gegenüberliegende axiale Enden auf, und zwar ein bezogen auf die Prozessmediumströmung stromaufwärtiges oder axial vorderes Ende und ein bezogen auf die Prozessmediumströmung stromabwärtiges oder axial hinteres Ende.

Der erste Eintrittskanalabschnitt 22 ist zwischen dem stromaufwärtigen oder axial vorderen Ende des Schaufelfußes 12 und dem zweiten Eintrittskanalabschnitt 23 angeordnet. Der zweite Eintrittskanalabschnitt 23 ist zwischen dem ersten Eintrittskanalabschnitt 22 und dem stromabwärtigen oder axial hinteren Ende des Schaufelfußes 12 angeordnet. Zwischen den beiden Eintrittskanalabschnitten 22 und 23, die in Axialrichtung des Schaufelfußes 12 voneinander beabstandet sind, erstreckt sich ein Materialsteg 24. Dieser Materialsteg 24 versteift die Laufschaufel 10 im Bereich ihres Schaufelfußes 12.

Der erste Eintrittskanalabschnitt 22 und der zweite Eintrittskanalabschnitt 23 des Kühlkanals 20 gehen in einen Verbindungskanalabschnitt 25 über. Der erste Eintrittskanalabschnitt 22 und der zweite Eintrittskanalabschnitt 23 verlaufen ausgehend von ihrer jeweiligen Strömungseintrittsöffnung, also ausgehend von radial innen, zunächst geradlinig im Wesentlichen in Radialrichtung nach radial außen.

Anschließend an denjenigen Bereich, in welchem die beiden Eintrittskanalabschnitte 22, 23 im Wesentlichen in Radialrichtung geradlinig verlaufen, verlaufen die beiden Eintrittskanalabschnitte 22, 23 in Richtung auf den Verbindungskanalabschnitt 25 gebogen oder gekrümmt. Die Krümmung der Eintrittskanalabschnitte 22, 23 zwischen den im Wesentlichen geradlinig in Radialrichtung verlaufenden Bereichen derselben und dem Verbindungskanalabschnitt 25 ist dabei in Richtung auf das stromaufwärtige oder axial vordere Ende des Schaufelfußes 12 bzw. in Richtung auf die Strömungseintrittskante 13 der Laufschaufel 11 gerichtet.

Anschließend an den Verbindungskanalabschnitt 25 erstreckt sich der Kühlkanal 20 im Bereich des Schaufelblatts 11 mit einem ersten im Wesentlichen in Radialrichtung erstreckenden Kühlkanalabschnitt 26 des Schaufelblatts 11 zunächst nach radial außen in Richtung auf einen radial äußeren Umlenkkanalabschnitt 27, anschließend an den radial äußeren Umlenkkanalabschnitt 27 mit einem zweiten im Wesentlichen in Radialrichtung erstreckenden Kühlkanalabschnitt 28 des Schaufelblatts 11 nach radial innen in Richtung auf einen inneren Umlenkkanalabschnitt 29 und anschließend an diesen radial inneren Umlenkkanalabschnitt 29 mit einem dritten im Wesentlichen in Radialrichtung erstreckenden Kühlkanalabschnitt 30 des Schaufelblatts 11 nach radial außen in Richtung auf den Kühlkanalaustritt 31. Die sich im Wesentlichen in Radialrichtung erstreckenden Kühlkanalabschnitte 26, 28 und 30 des Kühlkanals 20 erstrecken sich dabei innerhalb des Schaufelblatts 11. Die jeweils benachbarten Kühlkanalabschnitte 26, 28 und 28, 30 sind in Axialrichtung hintereinander positioniert. Der radial innere Umlenkkanalabschnitt 29 ist in Radialrichtung gesehen unterhalb oder radial innen des Innendeckbands 18 angeordnet. Der radial äußere Umlenkkanalabschnitt 27 kann sich in den Bereich des Außendeckbands 19 hinein erstrecken. Die jeweils benachbarten Kühlkanalabschnitte 26, 28 und 28, 30 gehen über jeweils einen Umlenkkanalabschnitt 27, 29 ineinander über. Im Wesentlichen in Radialrichtung erstreckend bedeutet, dass der jeweilige Kühlkanalabschnitt gegenüber der Radialrichtung um maximal 30°, vorzugsweise um maximal 20°, geneigt ist.

Im Bereich des Schaufelblatts 11 ist zwischen dem ersten Kühlkanalabschnitt 26 des Schaufelblatts 11 und dem benachbarten zweiten Kühlkanalabschnitt 28 des Schaufelblatts 11 ein erster Materialsteg 16 ausgebildet, der sich im Wesentlichen in Radialrichtung erstreckt. Zwischen dem zweiten Kühlkanalabschnitt 28 des Schaufelblatts 11 und dem benachbarten dritten Kühlkanalabschnitt 30 des Schaufelblatts 11 erstreckt sich ein zweiter Materialsteg 17, der sich auch im Wesentlichen in Radialrichtung erstreckt. In Axialrichtung gesehen ist dabei der erste Materialsteg 16 vor dem zweiten Materialsteg 17 ausgebildet. Die Materialstege 16, 17 versteifen das Schaufelblatt 11.

Der erste Materialsteg 16, der zwischen dem ersten Kühlkanalabschnitt 26 und dem zweiten Kühlkanalabschnitt 28 ausgebildet ist, endet radial außen im Bereich des radial äußeren Umlenkkanalabschnitts 27. Der zweite Materialsteg 17, der zwischen dem zweiten Kühlkanalabschnitt 28 und dem dritten Kühlkanalabschnitt 30 ausgebildet ist, endet radial innen im Bereich des radial inneren Umlenkkanalabschnitts 29.

Der erste Materialsteg 16 und der zweite Materialsteg 17 verfügen in Axialrichtung gesehen jeweils über eine definierte axiale Breite x. Diese definierte axiale Breite x des ersten Materialstegs 16 kann der definierten axialen Breite x des zweiten Materialstegs 17 entsprechen. Die axialen Breiten x der beiden Materialstege 16 und 17 können auch voneinander abweichen.

Der erste Materialsteg 16 und/oder der zweite Materialsteg 17, vorzugsweise beide Materialstege 16 und 17, weist bzw. weisen im Bereich des jeweiligen Umlenkkanalabschnitts 27, 29 eine Materialaufdickung 32 auf, welche die axiale Breite des jeweiligen Materialstegs 16, 17 im Bereich des jeweiligen Umlenkkanalabschnitts 27, 29 verbreitert und zwar um mindestens 20%.

Vorzugsweise ist vorgesehen, dass der erste Materialsteg 16 im Bereich des radial äußeren Umlenkkanalabschnitts 27 und der zweite Materialsteg 17 im Bereich des radial inneren Umlenkkanalabschnitts 29 jeweils eine Vergrößerung der axialen Breite um zwischen 20% und 40%, vorzugsweise zwischen 30% und 40%, aufweist.

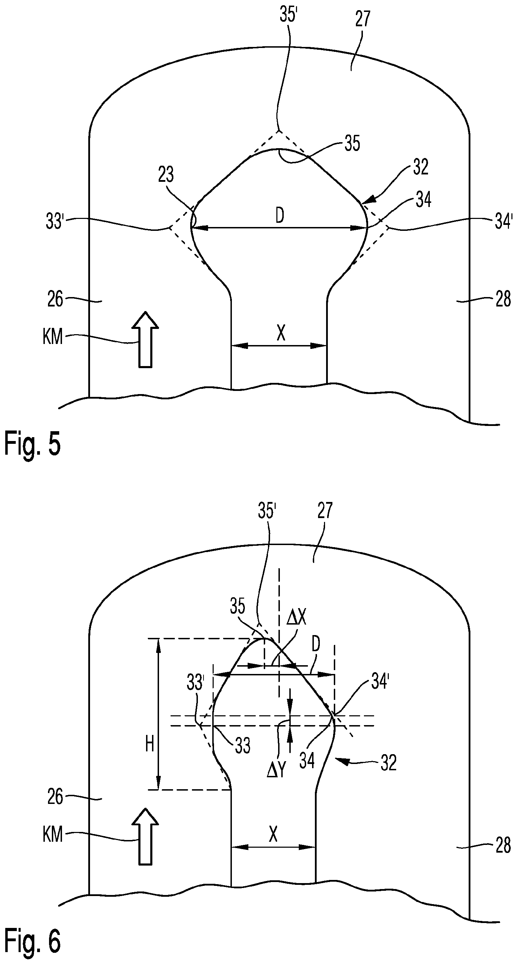

Unter Bezugnahme auf die in Fig. 5 eingezeichneten Maße x und D gilt demnach: $0{,}2 \leq (D-x)/x \leq 0{,}4$. Vorzugsweise gilt: $0{,}3 \leq (D-x)/x \leq 0{,}4$. x ist die definierte axiale Breite des jeweiligen Materialstegs 32 außerhalb des Bereichs der Materialaufdickung 32, und D ist die maximale axiale Breite der Materialaufdickung 32.

Im Axialschnitt gesehen (siehe insbesondere Fig. 5 und 6) ist erfindungsgemäß die jeweilige Materialaufdickung 32 prismenartig ausgebildet. Die jeweilige prismenartige Materialaufdickung 32 weist im Axialschnitt gesehen eine axial vordere und damit der Strömungseintrittskante 13 des Schaufelblatts 11 zugewandte, verrundete Ecke 33, eine axial hintere und damit von der Strömungseintrittskante 13 des Schaufelblatts 11 abgewandte, verrundete Ecke 34 und eine axial mittlere, in Axialrichtung gesehen zwischen den verrundeten Ecken 33, 34 angeordnete, verrundete Ecke 35 auf, bei welcher es sich für den Materialsteg 16 im Bereich des radial äußeren Umlenkabschnitts 27 um eine radial äußere Ecke 35 und für den Materialsteg 17 im Bereich des radial inneren Umlenkabschnitts 29 um eine radial innere Ecke 35 handelt. Wie bereits ausgeführt, ist im Querschnitt gesehen die Materialaufdickung 32 prismenartig ausgeführt. Die oben beschriebenen Ecken 33, 34 und 35 dieser Prismenkontur sind verrundet. Fig. 5 zeigt mit den Bezugsziffern 33, 34 und 35 die verrundeten Ecken des Prismas. Mit den Bezugsziffern 33', 34' und 35' sind die nicht verrundeten Ecken der jeweiligen Prismenkontur gezeigt.

Im Ausführungsbeispiel der Fig. 5 ist die jeweilige prismenartige Materialaufdickung 32 im Axialschnitt gesehen symmetrisch ausgebildet. Die axial vordere, verrundete Ecke 33 und die axial hintere, verrundete Ecke 34 sind auf der gleichen Radialposition angeordnet. Die axial mittlere, verrundete Ecke 35 ist einerseits in der axialen Mitte zwischen der axial vorderen, verrundeten Ecke 33 und der axial hinteren, verrundeten Ecke 34 und andererseits in der axialen Mitte des Stegs 16 bzw. 17 außerhalb der Materialaufdickung 32 angeordnet.

Um die Strömungsverhältnisse des Kühlmediums im Bereich des jeweiligen Umlenkkanalabschnitts 27, 29 anzupassen bzw. optimal einzustellen, kann vorgesehen sein (siehe Fig. 6), dass die jeweilige prismenartige Materialaufdickung 32 des jeweiligen Stegs 16, 17 im Axialschnitt gesehen unsymmetrisch ausgebildet ist.

Fig. 6 verdeutlicht dabei eine bevorzugte unsymmetrische, prismenartige Materialaufdickung.

Fig. 6 kann entnommen werden, dass die axial mittlere, verrundete Ecke 35 gegenüber der axialen Mitte zwischen der axial vorderen Ecke 33 und der axial hinteren Ecke 34 sowie gegenüber der axialen Mitte des jeweiligen Stegs 16, 17 außerhalb der Materialaufdickung 32 nach axial vorne und damit in Richtung auf die Strömungseintrittskante verschoben ist.

Dabei ist die mittlere, verrundete Ecke 35 gegenüber der axialen Mitte um den Betrag Δx nach vorne in Richtung auf die Strömungseintrittskante 13 verschoben. Der Betrag Δx, um den die axial mittlere, verrundete Ecke 35 nach axial vorne in Richtung auf die Strömungseintrittskante 13 verschoben ist, beträgt zwischen 10% und 20% der axialen Breite x des jeweiligen Stegs 16, 17 außerhalb der Materialaufdickung. Es gilt demnach:

$$0,1 \leq \Delta x/x \leq 0,2$$

wobei x die axiale Breite des Stegs 16, 17 außerhalb der Materialaufdickung 32 ist, und wobei Δx der Betrag ist, um den die axial mittlere Ecke 35 gegenüber der axialen Mitte des Stegs 16, 17 nach axial vorne verschoben ist.

Im bevorzugten Ausführungsbeispiel einer unsymmetrischen Ausgestaltung der jeweiligen Materialaufdickung 32 ist gemäß Fig. 6 vorgesehen, dass im Axialschnitt gesehen die axial vordere, verrundete Ecke 33 gegenüber der axial hinteren, verrundeten Ecke 34 in Radialrichtung versetzt ist, und zwar im Bereich des äußeren Umlenkkanalabschnitts 27 für den Materialsteg 16 nach radial innen und im Bereich des radial inneren Umlenkkanalabschnitts 29 nach radial außen.

Dieser radiale Versatz Δy zwischen den verrundeten Ecken 33, 34 der jeweiligen prismenartigen Materialaufdickung 32 beträgt dabei vorzugsweise zwischen 10% und 20% der radialen Höhe H der jeweiligen Materialaufdickung. Es gilt demnach:

$$0,1 \leq \Delta y/H \leq 0,2$$

wobei Δy der radiale Versatz zwischen den Ecken 33, 34 ist, und wobei H die jeweilige radiale Höhe der Materialaufdickung ist.

Senkrecht zur Axialrichtung gesehen sowie senkrecht zur Radialrichtung gesehen, also in einer senkrecht zur Zeichenebene der Fig. 5 und 6 verlaufenden Richtung, kann die jeweilige prismenartige Materialaufdickung 32 eine konstante Dicke aufweisen. Die Dicke derselben kann jedoch auch in dieser Richtung variieren. Dabei ist dann insbesondere vorgesehen, dass die Dicke der jeweiligen prismenartigen Materialaufdickung 32 im Bereich der Strömungsführungsflächen 15 dicker ist als zwischen denselben.

Bei der erfindungsgemäßen Schaufel 10 kann eine Strömungsführung des Kühlmediums im Bereich der Umlenkkanalabschnitte 27, 29 optimal gestaltet werden, um so eine möglichst effektive Kühlung der Laufschaufel 10 zu ermöglichen. Ferner stellt die Erfindung eine gute Festigkeit der Schaufel 10 bereit.

Bezugszeichenliste

| | |
|---|---|
| 10 | Laufschaufel |
| 11 | Schaufelblatt |
| 12 | Schaufelfuß |
| 13 | Strömungseintrittskante |
| 14 | Strömungsaustrittskante |
| 15 | Strömungsführungsfläche |
| 16 | Materialsteg |
| 17 | Materialsteg |
| 18 | Innendeckband |
| 19 | Außendeckband |
| 20 | Kühlkanal |
| 21 | Kühlkanaleintritt |
| 22 | erster Eintrittskanalabschnitt |
| 23 | zweiter Eintrittskanalabschnitt |
| 24 | Materialsteg |
| 25 | Vereinigungskanalabschnitt |
| 26 | Kühlkanalabschnitt |
| 27 | Umlenkkanalabschnitt |
| 28 | Kühlkanalabschnitt |
| 29 | Umlenkkanalabschnitt |
| 30 | Kühlkanalabschnitt |
| 31 | Kühlkanalaustritt |
| 32 | Materialaufdickung |
| 33 | axial vordere Ecke |
| 34 | axial hintere Ecke |
| 35 | axial mittlere Ecke |

**Patentansprüche**

1. Schaufel (10) einer Strömungsmaschine,

   mit einem Schaufelblatt (11), welches eine Strömungseintrittskante (13), eine Strömungsaustrittskante (14) und sich zwischen der Strömungseintrittskante (13) und der Strömungsaustrittskante (14) erstreckende Strömungsführungsflächen (15) für ein Prozessmedium aufweist,
   mit einem in das Schaufelblatt (11) integrierten Kühlkanal (20) für ein Kühlmedium, wobei sich im Bereich des Schaufelblatts (11) Kühlkanalabschnitte (26, 28, 30) jeweils im Wesentlichen in Radialrichtung erstrecken, wobei benachbarte Kühlkanalabschnitte (26, 28; 28, 30) über jeweils einen Umlenkkanalabschnitt (27, 29) ineinander übergehen,

mit einem sich zwischen den benachbarten Kühlkanalabschnitten (26, 28; 28, 30) erstreckenden Materialsteg (16, 17), wobei der jeweilige Materialsteg (16, 17) im Bereich des jeweiligen Umlenkkanalabschnitts (27, 29) endet, wobei der jeweilige Materialsteg (16, 17) zwischen den jeweiligen benachbarten Kühlkanalabschnitten (26, 28; 28, 30) eine definierte axiale Breite (x) aufweist, und wobei der jeweilige Materialsteg (16, 17) im Bereich des jeweiligen Umlenkkanalabschnitts (27, 29) unter Vergrößerung der axialen Breite um mindestens 20% eine Materialaufdickung (32) aufweist, **dadurch gekennzeichnet, dass** im Axialschnitt gesehen die jeweilige Materialaufdickung (32) prismenartig mit einer axial vorderen und damit der Strömungseintrittskante zugewandten, verrundeten Ecke (33), mit einer axial hinteren und damit von der Strömungseintrittskante abgewandten, verrundeten Ecke (34) und einer axial mittleren, in Axialrichtung gesehen zwischen diesen verrundeten Ecken (33, 34) angeordneten, radial äußeren oder radial inneren, verrundeten Ecke (35) ausgebildet ist.

2. Schaufel nach Anspruch 1, **dadurch gekennzeichnet, dass**
der jeweilige Materialsteg (16, 17) im Bereich des jeweiligen Umlenkkanalabschnitts (27, 29) eine Vergrößerung der axialen Breite um zwischen 20% und 40% aufweist.

3. Schaufel nach Anspruch 2, **dadurch gekennzeichnet, dass**
der jeweilige Materialsteg (16, 17) im Bereich des jeweiligen Umlenkkanalabschnitts (27, 29) eine Vergrößerung der axialen Breite um zwischen 30% und 40% aufweist.

4. Schaufel nach Anspruch 1, **dadurch gekennzeichnet, dass**
im Axialschnitt gesehen die jeweilige prismenartige Materialaufdickung (32) derart symmetrisch ausgebildet ist, dass die jeweilige axial vordere Ecke (33) und die jeweilige axial hintere Ecke (34) auf dergleichen Radialposition angeordnet sind, und dass die jeweilige axial mittlere Ecke (35) in der axialen Mitte zwischen der jeweiligen axial vorderen Ecke (33) und der jeweiligen axial hinteren Ecke (34) und in der axialen Mitte des jeweiligen Materialstegs (16, 17) außerhalb der Materialaufdickung (32) angeordnet ist.

5. Schaufel nach Anspruch 1, **dadurch gekennzeichnet, dass**
im Axialschnitt gesehen die jeweilige prismenartige Materialaufdickung (32) derart unsymmetrisch ausgebildet ist, dass die jeweilige axial mittlere Ecke (35) gegenüber der axialen Mitte zwischen der jeweiligen axial vorderen Ecke (33) und der jeweiligen axial hinteren Ecke (34) und gegenüber der axialen Mitte des jeweiligen Materialstegs (16, 17) außerhalb der Materialaufdickung (32) nach axial vorne und damit in Richtung auf die Strömungseintrittskante verschoben ist.

6. Schaufel nach Anspruch 5, **dadurch gekennzeichnet, dass**
ein Betrag, um den die jeweilige axial mittlere Ecke (35) nach axial vorne verschoben ist, zwischen 10% und 20% der axialen Breite (x) des jeweiligen Stegs (16, 17) außerhalb der Materialaufdickung (32) beträgt.

7. Schaufel nach Anspruch 5 oder 6, **dadurch gekennzeichnet, dass**
im Axialschnitt gesehen die jeweilige prismenartige Materialaufdickung (32) derart unsymmetrisch ausgebildet ist, dass die jeweilige axial vordere Ecke (33) gegenüber der jeweiligen axial hinteren Ecke (34) in Radialrichtung radial versetzt ist.

8. Schaufel nach Anspruch 7, **dadurch gekennzeichnet, dass**
im Bereich eines radial äußeren Umlenkkanalabschnitts (27) die jeweilige axial vordere Ecke (33) gegenüber der jeweiligen axial hinteren Ecke (34) nach radial innen versetzt ist.

9. Schaufel nach Anspruch 7, **dadurch gekennzeichnet, dass**
im Bereich eines radial inneren Umlenkkanalabschnitts (29) die jeweilige axial vordere Ecke (33) gegenüber der axial hinteren Ecke (34) nach jeweiligen radial außen versetzt ist.

10. Schaufel nach einem der Ansprüche 7 bis 9, **dadurch gekennzeichnet, dass**
der radiale Versatz zwischen der axial vorderen Ecke (33) gegenüber der axial hinteren Ecke (34) zwischen 10% und 20% der radialen Höhe (H) der jeweiligen Materialaufdickung (32) beträgt.

11. Schaufel (10) nach einem der Ansprüche 1 bis 10, **dadurch gekennzeichnet, dass**

dieselbe einem Schaufelfuß (12) zur Befestigung an einem Nabenkörper der Strömungsmaschine aufweist,
der Kühlkanal (20) für das Kühlmedium in das Schaufelblatt (11) und den Schaufelfuß (12) derart integriert ist, dass ein Eintritt (21) des Kühlkanals (20) radial innen am Schaufelfuß (12) und ein Austritt (31) des Kühlkanals (20) radial außen am Schaufelblatt (11) oder an einem Außendeckband (19) ausgebildet ist, dass sich im Bereich des Schaufelblatts (11) ein erster Kühlkanalabschnitt (26) des Kühlkanals (20) zunächst nach radial außen in Richtung auf einen radial äußeren Umlenkkanalabschnitt (27), hieran anschließend ein zweiter Kühlkanalabschnitt (28) nach radial innen in Richtung auf einen radial inneren Umlenkkanalabschnitt (29) und hieran anschließend ein dritter Kühlkanalabschnitt (30) nach radial außen in Richtung auf den Austritt (31) des Kühlkanals (31) erstreckt, sich zwischen dem ersten Kühlkanalabschnitt (26) und dem zweiten Kühlkanalabschnitt (28) ein ersten Materialsteg (16) und zwischen dem zweiten Kühlkanalabschnitt (28) und dem dritten Kühlkanalabschnitt (30) ein zweiten Materialsteg (17) erstreckt, wobei der erste Materialsteg (16) im Bereich des radial äußeren Umlenkkanalabschnitts (27) und der zweite Materialsteg (17) im Bereich des radial inneren Umlenkkanalabschnitts (29) endet, wobei der erste Materialsteg (16) und der zweite Materialsteg (17) zwischen den jeweiligen Kühlkanalabschnitten (26, 28, 30) ein definierte axiale Breite (x) aufweist, und wobei der erste Materialsteg (16) und/oder der zweite Materialsteg (17) im Bereich des jeweiligen Umlenkkanalabschnitts (27, 29) die Materialaufdickung (32) unter Vergrößerung der axialen Breite um mindestens 20% aufweist.

## Claims

1. A blade (10) of a turbomachine,

    having a blade leaf (11), which comprises a flow leading edge (13), a flow trailing edge (14) and flow guiding surfaces (15) for a process medium extending between the flow leading edge (13) and the flow trailing edge (14),
    having a cooling channel (20) integrated in the blade leaf (11) for a cooling medium, wherein in the region of the blade leaf (11) cooling channel portions (26, 28, 30) each extend substantially in the radial direction, wherein adjacent cooling channel portions (26, 28; 28, 30) merge into one another via a deflection channel portion (27, 29), having a material web (16, 17) extending between the adjacent cooling channel portions (26, 28; 28, 30), wherein the respective material web (16, 17) ends in the region of the respective deflection channel portion (27, 29), wherein the respective material web (16, 17) between the respective adjacent cooling channel portions (26, 28; 28, 30) has a defined axial width (x) and wherein the respective material web (16, 17) in the region of the respective deflection channel portion (27, 29) has a material thickening (32) enlarging the axial width by at least 20%, **characterised in that** seen in the axial section the respective material thickening (32) is formed with a rounded corner (33) which is axially at the front and thus facing the flow leading edge, having a rounded corner (34) axially at the rear and thus facing away from the flow leading edge and an axially middle radially outer or radially inner rounded corner (35) arranged seen in the axial direction between the said rounded corners (33, 34).

2. The blade according to Claim 1, **characterised in that** the respective material web (16, 17), in the region of the respective deflection channel portion (27, 29) has an enlargement of the axial width by between 20% and 40%.

3. The blade according to Claim 2, **characterised in that** the respective material web (16, 17) in the region of the respective deflection channel portion (27, 29) has an enlargement of the axial width by between 30% and 40%.

4. The blade according to Claim 1, **characterised in that**
    seen in the axial section, the respective prism-like material thickening (32) is formed symmetrically in such a manner that the respective axial front corner (33) and the respective axial rear corner (34) are arranged in the same radial position, and **in that** the respective axial middle corner (35) is arranged in the axial centre between the respective axial front corner (33) and the respective axial rear corner (34) and in the axial centre of the respective material web (16, 17) outside the material thickening (32).

5. The blade according to Claim 1, **characterised in that** seen in the axial section, the respective prism-like material thickening (32) is formed unsymmetrically in such a manner that the respective axial centre corner (35) is moved relative to the axial centre between the respective axial front corner (33) and the respective axial rear corner (34) and relative to the axial centre of the respective material web (16, 17) outside the material thickening (32) axially to the front and thus in the direction of the flow leading edge.

6. The blade according to Claim 5, **characterised in that** an amount, by which the respective axial centre corner (35) is moved axially to the front, is between 10% and 20% of the axial width (x) of the respective web (16, 17) outside the material thickening (32).

7. The blade according to Claim 5 or 6, **characterised in that** seen in the axial section the respective prism-like material thickening (32) is formed unsymmetrically in such a manner that the respective axial front corner (33) relative to the respective axial rear corner (34) is radially offset in the radial direction.

8. The blade according to Claim 7, **characterised in that** in the region of a radially outer deflection channel portion (27) the respective axial front corner (33) relative to the respective axial rear corner (34) is offset radially to the inside.

9. The blade according to Claim 7, **characterised in that** in the region of a radially inner deflection channel portion (29) the respective axial front corner (33) relative to the respective axial rear corner (34) is offset radially to the outside.

10. The blade according to any one of the Claims 7 to 9, **characterised in that** the radial offset between the axial front corner (33) relative to the axial rear corner (34) amounts to between 10% and 20% of the radial height (H) of the respective material thickening (32).

11. The blade (10) according to any one of the Claims 1 to 10, **characterised in that**

the same comprises a blade root (12) for mounting to a hub body of the turbomachine, the cooling channel (20) for the cooling medium is integrated in the blade leaf (11) and the blade root (12) in such a manner that an inlet (21) of the cooling channel (20) is formed radially inside on the blade root (12) and an outlet (31) of the cooling channel (20) radially outside on the blade leaf (11) or on an outer shroud (19), **in that** in the region of the blade leaf (11) a first cooling channel portion (26) of the cooling channel (20) extends initially radially to the outside in the direction of a radially outer deflection channel portion (27), following thereon a second cooling channel portion (28) radially to the inside in the direction of a radially inner deflection channel portion (29) and following thereon a third cooling channel portion (30) radially to the outside in the direction of the outlet (31) of the cooling channel (31), between the first cooling channel portion (26) and the second cooling channel portion (28) a first material web (16) and between the second cooling channel portion (28) and the third cooling channel portion (30) a second material web (17) extends, wherein the first material web (16) ends in the region of the radially outer deflection channel portion (27) and the second material web (17) in the region of the radially inner deflection channel portion (29), wherein the first material web (16) and the second material web (17) have between the respective cooling channel portions (26, 28, 30) a defined axial width (x) and wherein the first material web (16) and/or the second material web (17) in the region of the respective deflection channel portion (27, 29) has the material thickening (32) enlarging the axial width by at least 20%.

## Revendications

1. Aube (10) de turbomachine,

comportant une pale (11) qui présente un bord d'attaque d'écoulement (13), un bord de fuite d'écoulement (14) et des surfaces de guidage d'écoulement (15) pour un fluide de traitement s'étendant entre le bord d'attaque d'écoulement (13) et le bord de fuite d'écoulement (14), comportant un canal de refroidissement (20) intégré dans la pale (11) pour un fluide de refroidissement, dans laquelle dans la zone de la pale (11) des sections de canal de refroidissement (26, 28, 30) s'étendent chacune essentiellement dans la direction radiale, dans laquelle des sections de canal de refroidissement adjacentes (26, 28 ; 28, 30) se rejoignent chacune via une portion de canal de déviation (27, 29), comportant une bande de matériau (16, 17) s'étendant entre les tronçons de canal de refroidissement adjacents (26, 28; 28, 30), dans laquelle la bande de matériau respective (16, 17) aboutit au niveau de la section de canal de déviation respective (27, 29), dans laquelle la bande de matériau respective (16, 17) entre les sections de canal de refroidissement respectives adjacentes (26, 28 ; 28, 30) présente une largeur axiale (x) définie, et dans laquelle la bande de matériau respective (16, 17) au niveau de la section de canal de déviation respective (27, 29) présente un épaississement de matériau (32) avec une augmentation de la largeur axiale d'au moins 20 %, **caractérisée en ce que** vu en coupe axiale, l'épaississement de matériau respectif (32) est configuré en forme de prisme avec un coin arrondi axialement avant (33) et faisant ainsi face au bord d'attaque d'écoulement, avec un coin arrondi axialement arrière (34) et donc tourné à l'opposé du bord d'attaque d'écoulement et un coin axialement médian entre un coin arrondi (35) radialement extérieur ou radialement intérieur, disposé axialement au centre entre des coins arrondis vus dans la direction axiale (33, 34).

**2.** Aube selon la revendication 1, **caractérisée en ce que** la bande de matériau respective (16, 17) au niveau de la section de canal de déviation respective (27, 29) présente une augmentation de la largeur axiale comprise entre 20% et 40%.

**3.** Aube selon la revendication 2, **caractérisée en ce que** la bande de matériau respective (16, 17) au niveau de la section de canal de déviation respective (27, 29) présente une augmentation de la largeur axiale comprise entre 30% et 40%.

**4.** Aube selon la revendication 1, **caractérisée en ce que** vu en coupe axiale l'épaississement respectif du matériau en forme de prisme (32) est formé symétriquement de telle sorte que le coin axialement avant respectif (33) et le coin axialement arrière respectif (34) soient disposés sur la même position radiale, et que le coin axialement médian respectif (35) soit disposé dans le centre axial entre le coin axialement avant respectif (33) et le coin axialement arrière respectif (34) et au centre axial de la bande de matériau respective (16, 17) à l'extérieur de l'épaississement de matériau (32).

**5.** Aube selon la revendication 1, **caractérisée en ce que** vue en coupe axiale, l'épaississement respectif du matériau en forme de prisme (32) est conçu de manière asymétrique de telle sorte que le coin axial central respectif (35) à l'opposé du centre axial entre le coin axialement avant respectif (33) et le coin axialement arrière respectif (34) et à l'opposé du centre axial de la bande de matériau respective (16, 17) à l'extérieur de l'épaississement de matériau (32) soit déplacé axialement vers l'avant et donc en direction du bord d'attaque d'écoulement.

**6.** Aube selon la revendication 5, **caractérisée en ce qu'**une quantité, dans laquelle le coin axialement central respectif (35) dépasse en saillie axialement est comprise entre 10 % et 20 % de la largeur axiale (x) de la bande de matériau respective (16, 17) à l'extérieur de l'épaississement de matériau (32).

**7.** Aube selon la revendication 5 ou 6, **caractérisée en ce que** vu en coupe axiale l'épaississement respectif du matériau en forme de prisme (32) est conçu de manière asymétrique de telle sorte que le coin axialement avant respectif (33) soit décalé radialement dans la direction radiale par rapport au coin axialement arrière respectif (34).

**8.** Aube selon la revendication 7, **caractérisée en ce qu'**au niveau d'une section de canal de déviation radialement extérieure (27), le coin axialement avant respectif (33) opposé au coin axialement arrière respectif (34) est décalé radialement vers l'intérieur.

**9.** Aube selon la revendication 7, **caractérisée en ce qu'**au niveau d'une section de canal de déviation radialement intérieure (29) le coin axialement avant respectif (33) opposé au coin axialement arrière (34) est décalé radialement vers l'extérieur.

**10.** Aube selon une des revendications 7 à 9, **caractérisée en ce que** le décalage radial entre le coin axialement avant (33) opposé au coin axialement arrière (34) est compris entre 10% et 20% de la hauteur radiale (H) de l'épaississement de matériau (32).

**11.** Aube (10) selon une quelconque des revendications 1 à 10, **caractérisée en ce que**

celle-ci présente un pied d'aube (12) pour sa fixation sur un corps de moyeu de la turbomachine,
le canal de refroidissement (20) du fluide de refroidissement est intégré dans la pale (11) et le pied d'aube (12) de telle sorte qu'une entrée (21) du canal de refroidissement (20) radialement intérieure au niveau du pied d'aube (12) et d'une sortie (31) du canal de refroidissement (20) soit formée radialement à l'extérieur de la pale (11) ou sur une virole extérieure (19) de sorte que dans la zone de la pale (11) une première section de canal de refroidissement (26) du canal de refroidissement (20) s'étende initialement radialement vers l'extérieur dans la direction d'une section de canal de déviation radialement extérieure (27), suivie d'une deuxième section de canal de refroidissement (28) radialement vers l'intérieur dans la direction d'une section de canal de déviation radialement intérieure (29) et ensuite d'une troisième section de canal de refroidissement (30) radialement vers l'extérieur dans la direction de la sortie (31) du canal de refroidissement (31),
entre la première section de canal de refroidissement (26) et la deuxième section de canal de refroidissement (28), une première bande de matériau (16) et entre la deuxième section de canal de refroidissement (28) et la troisième section de canal de refroidissement (30) une deuxième bande de matériau (17) s'étend, dans laquelle la première bande de matériau (16) dans la zone de la section de canal de déviation radialement externe (27) et la deuxième nappe de matériau (17) se termine dans la zone de la section de canal de déviation radialement interne (29),
dans laquelle la première bande de matériau (16) et la deuxième bande de matériau (17) présentent une largeur axiale définie (x) entre les sections de canal de refroidissement respectives (26, 28, 30), et dans laquelle la première bande de matériau (16) et/ ou la deuxième bande de matériau (17) dans la zone de la section de canal de déviation respective (27, 29) présente l'épaississement de matériau (32) avec une augmentation de la largeur axiale d'au moins 20 %.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2374997 A2
- US 2007140851 A1